# EUROPEAN PATENT APPLICATION

(11) **EP 4 564 577 A1**
(43) Date of publication of application: **04.06.2025**
(21) Application number: 23846237.8
(22) Date of filing: 12.07.2023
(51) Int. Cl.: H01M 50/451, H01M 10/0525, H01M 10/0587, H01M 50/414, H01M 50/423, H01M 50/434, H01M 50/443, H01M 50/446, H01M 50/46, H01M 50/463, H01M 50/489

(54) **NONAQUEOUS ELECTROLYTE SECONDARY BATTERY**

(30) Priority: 27.07.2022 JP 2022119927
(71) Applicant: Panasonic Energy Co., Ltd., Osaka 570-8511 (JP)
(72) Inventor: KASAMATSU, Shinji, Kadoma-shi, Osaka 571-0057 (JP); SUGII, Noriko, Kadoma-shi, Osaka 571-0057 (JP)
(74) Representative: Novagraaf International SA
(86) International application number: PCT/JP2023/025694
(87) International publication number: WO 2024/024506

(57) **Abstract**

The present invention provides a nonaqueous electrolyte secondary battery which is provided with: an electrode body that is obtained by winding a positive electrode and a negative electrode, with a separator (13) being interposed therebetween; and an outer package that contains the electrode body. With respect to this nonaqueous electrolyte secondary battery, the separator (13) comprises a base material layer (30) and a functional layer (32) that is formed on the base material layer (30); the functional layer (32) comprises a heat-resistant layer (34) which contains a heat-resistant resin and inorganic particles, and resin particles (36) which are dispersed in the heat-resistant layer (34) and have an average particle diameter that is larger than the thickness of the heat-resistant layer (34); and the resin particles (36) each have a projection part (36a) which protrudes from the surface of the heat-resistant layer (34).

## Description

### TECHNICAL FIELD

The present disclosure relates to a non-aqueous electrolyte secondary battery.

### BACKGROUND

In recent years, as a secondary battery having high output and high energy density, a non-aqueous electrolyte secondary battery including an electrode assembly in which a positive electrode and a negative electrode are arranged to face each other with a separator interposed therebetween has been widely used.

For example, Patent Literature 1 discloses a technique in which a static friction coefficient of a surface of a separator is set to 0.45 or less in order to improve a winding core slipping property when a winding-type electrode assembly is produced.

For example, Patent Literature 2 discloses a separator including a base material and a layer formed on the base material and containing a heat-resistant resin and inorganic particles.

For example, Patent Literature 3 discloses a separator including a base material and a functional layer formed on the base material and containing inorganic particles and resin particles, the resin particles having a volume average particle diameter larger than a thickness of an inorganic particle layer containing inorganic particles.

### CITATION LIST

### PATENT LITERATURE

Patent Literature 1: JP 2011-126275 A
Patent Literature 2: JP 3175730 B
Patent Literature 3: WO 2020/175079 A1

### SUMMARY

Meanwhile, in a non-aqueous electrolyte secondary battery in which a winding-type electrode assembly is housed in an exterior housing assembly, when an electrode assembly expands during a charge-discharge cycle, pressure is applied to the electrode assembly from the exterior housing assembly, and electrode plate deformation in which an electrode plate constituting the electrode assembly is bent may occur. Since the electrode plate deformation may cause an internal short circuit, it is an important issue to suppress electrode plate deformation.

Therefore, an object of the present disclosure is to provide a non-aqueous electrolyte secondary battery capable of suppressing electrode plate deformation during a charge-discharge cycle.

A non-aqueous electrolyte secondary battery according to the present disclosure includes: an electrode assembly in which a positive electrode and a negative electrode are wound with a separator interposed therebetween; and an exterior housing assembly accommodating the electrode assembly, in which the separator includes a base material layer and a functional layer formed on the base material layer, the functional layer includes a heat-resistant layer containing a heat-resistant resin and inorganic particles, and resin particles dispersed in the heat-resistant layer and having an average particle diameter larger than a thickness of the heat-resistant layer, and the resin particles form projections projecting from a surface of the heat-resistant layer.

According to the present disclosure, it is possible to provide a non-aqueous electrolyte secondary battery capable of suppressing electrode plate deformation during a charge-discharge cycle.

### BRIEF DESCRIPTION OF DRAWINGS

FIG. 1 is a schematic cross-sectional view of a non-aqueous electrolyte secondary battery as an example of an embodiment.
FIG. 2 is a schematic cross-sectional view showing an example of a separator according to the present embodiment.
FIG. 3 is a diagram for explaining a method for evaluating electrode plate deformation.

### DESCRIPTION OF EMBODIMENTS

Hereinafter, an example of an embodiment of a non-aqueous electrolyte secondary battery according to the present disclosure will be described in detail.

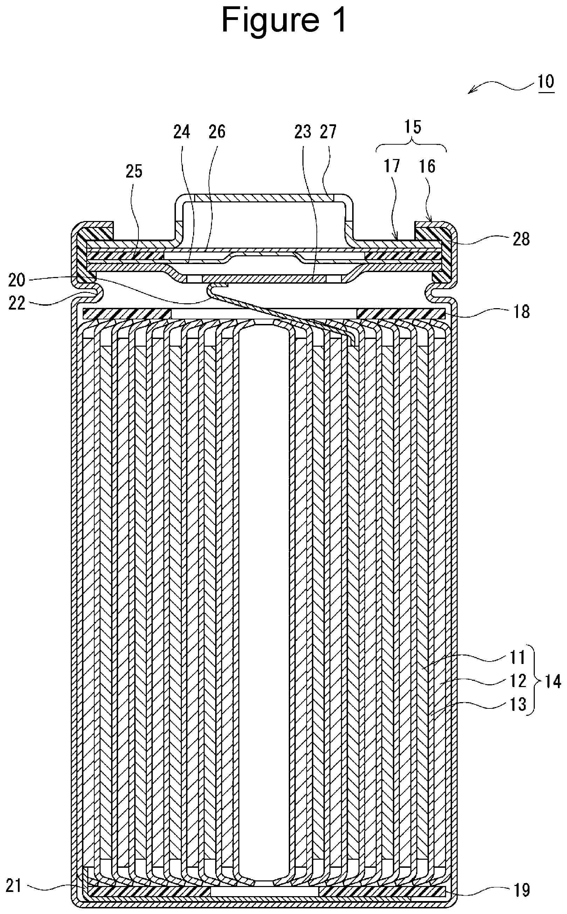

FIG. 1 is a schematic cross-sectional view of a non-aqueous electrolyte secondary battery as an example of an embodiment. A non-aqueous electrolyte secondary battery 10 shown in FIG. 1 includes a wound-type electrode assembly 14 formed by winding a positive electrode 11 and a negative electrode 12 with a separator 13 interposed therebetween, a non-aqueous electrolyte, insulating plates 18 and 19 disposed on and under the electrode assembly 14, respectively, and a battery case 15. The battery case 15 includes an exterior housing assembly 16 that houses the electrode assembly 14, the non-aqueous electrolyte, and the like, and a sealing assembly 17 that closes an opening of the exterior housing assembly 16. The battery case 15 is not limited to a cylindrical or rectangular metal case, and may be, for example, a resin case (a so-called laminate-type case) formed by laminating a resin sheet.

The non-aqueous electrolyte contains, for example, a non-aqueous solvent and an electrolyte salt dissolved in the non-aqueous solvent. Examples of the non-aqueous solvent include esters, ethers, nitriles, amides, and mixtures of two or more thereof. The non-aqueous solvent may contain a halogen-substituted product in which at least a part of hydrogen in the above-described solvent is substituted with a halogen atom such as fluorine. As the electrolyte salt, for example, a lithium salt such as LiPF₆ is used. Note that the non-aqueous electrolyte is not limited to the liquid electrolyte, and may be a solid electrolyte such as a gel polymer.

The exterior housing assembly 16 is, for example, a bottomed cylindrical metal container. A gasket 28 is provided between the exterior housing assembly 16 and the sealing assembly 17 to ensure sealability of the inside of the battery. The exterior housing assembly 16 has a projecting portion 22 supporting the sealing assembly 17, for example, by projecting a part of a side surface inward. The projecting portion 22 is preferably formed in an annular shape along a circumferential direction of the exterior housing assembly 16, and supports the sealing assembly 17 on an upper surface thereof.

The sealing assembly 17 has a structure in which a filter 23, a lower vent member 24, an insulating member 25, an upper vent member 26, and a cap 27 are stacked in this order from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at the respective central portions, and the insulating member 25 is interposed between the respective peripheral portions. When the internal pressure of the non-aqueous electrolyte secondary battery 10 increases due to heat generation caused by an internal short circuit or the like, for example, the lower vent member 24 is deformed to push up the upper vent member 26 toward the cap 27 side and breaks, and a current path between the lower vent member 24 and the upper vent member 26 is cut off. When the internal pressure further increases, the upper vent member 26 breaks, and gas is discharged from an opening of the cap 27.

In the non-aqueous electrolyte secondary battery 10 shown in FIG. 1, a positive electrode lead 20 attached to the positive electrode 11 extends toward the sealing assembly 17 side through a through hole of the insulating plate 18, and a negative electrode lead 21 attached to the negative electrode 12 extends toward the bottom side of the exterior housing assembly 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to an inner surface of the bottom of the exterior housing assembly 16 by welding or the like, and the exterior housing assembly 16 serves as a negative electrode terminal.

Hereinafter, the positive electrode 11, the negative electrode 12, and the separator 13 constituting the electrode assembly 14 will be described in detail.

### [Positive Electrode]

The positive electrode 11 includes a positive electrode current collector and a positive electrode mixture layer formed on a surface of the positive electrode current collector. The positive electrode mixture layer is preferably formed on both surfaces of the positive electrode current collector. As the positive electrode current collector, a foil of a metal that is stable in a potential range of the positive electrode 11, such as aluminum, a film in which the metal is disposed on a surface layer thereof, or the like can be used. The positive electrode mixture layer contains, for example, a positive electrode active material, a binding agent, a conductive agent, etc. The positive electrode 11 can be produced, for example, by applying a positive electrode mixture slurry containing a positive electrode active material, a binding agent, a conductive agent, etc. onto the positive electrode current collector, drying a coating film, and then compressing the coating film to form a positive electrode mixture layer on both surfaces of the positive electrode current collector.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). One kind of them may be used alone, or a plurality of kinds of them may be used in combination. From the viewpoint of achieving the high capacity of the non-aqueous electrolyte secondary battery, the positive electrode active material preferably contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 <x ≤ 1.2, 0 < y ≤ 0.9, and 2.0 ≤ z ≤ 2.3). Inorganic particles such as tungsten oxide, aluminum oxide, or a lanthanoid-containing compound may be fixed to the particle surface of the lithium transition metal oxide.

Examples of the conductive agent contained in the positive electrode mixture layer include carbon materials such as carbon black (CB), acetylene black (AB), Ketjenblack, carbon nanotube (CNT), graphene, and graphite. One kind of them may be used alone, or two or more kinds of them may be used in combination.

Examples of the binding agent included in the positive electrode mixture layer include fluorine-based resins such as polytetrafluoroethylene (PTFE) and polyvinylidene fluoride (PVDF), polyacrylonitrile (PAN), polyimide-based resins, acryl-based resins, and polyolefin-based resins. One kind of them may be used alone, or two or more kinds of them may be used in combination. In addition, these resins may be used in combination with carboxymethyl cellulose (CMC) or a salt thereof, polyethylene oxide (PEO), or the like.

### [Negative Electrode]

The negative electrode 12 includes a negative electrode current collector and a negative electrode mixture layer formed on a surface of the negative electrode current collector. The negative electrode mixture layer is preferably formed on both surfaces of the negative electrode current collector. As the negative electrode current collector, a foil of a metal that is stable in a potential range of the negative electrode, such as copper or a copper alloy, a film in which the metal is disposed on a surface layer thereof, or the like can be used. The negative electrode mixture layer contains, for example, a negative electrode active material, a binding agent, and the like. The negative electrode 12 can be produced, for example, by applying a negative electrode mixture slurry containing a negative electrode active material, a binding agent, etc. onto the negative electrode current collector, drying a coating film, and then compressing the coating film to form a negative electrode mixture layer on both surfaces of the negative electrode current collector.

The negative electrode active material contained in the negative electrode mixture layer is not particularly limited as long as it is capable of reversibly absorbing and releasing lithium ions, and a carbon-based active material such as graphite is generally used. The graphite may be any of natural graphite, such as scale-like graphite, massive graphite, or earthy graphite, and artificial graphite such as massive artificial graphite or graphitized mesophase carbon microbead. Further, as the negative electrode active material, a metal alloyed with Li such as Si or Sn, a metal compound containing Si or Sn, a lithium titanium composite oxide, or the like may be used. The negative electrode active material other than the carbon-based active material is preferably a silicon-based active material. Examples of the silicon-based active material include a Si-containing compound represented by SiOₓ (0.5 ≤ x ≤ 1.6), and a Si-containing compound in which Si fine particles are dispersed in a lithium silicate phase represented by Li_{2y}SiO_{(2+y)} (0 < y < 2), or the like. The amount of the silicon-based active material contained in the negative electrode mixture layer is, for example, preferably 1% by mass to 15% by mass, and more preferably 5% by mass to 10% by mass, with respect to the total mass of the negative electrode active material.

A conductive film is preferably formed on the particle surface of the silicon-based active material. As a material constituting the conductive film, at least one selected from a carbon material, a metal, and a metal compound can be exemplified. Among them, a carbon material such as amorphous carbon is preferable. The carbon film can be formed by, for example, a CVD method in which acetylene, methane, or the like is used, a method in which coal pitch, petroleum pitch, phenol resin, or the like is mixed with silicon-based active material particles and the mixture is heat-treated, or the like. The conductive film may also be formed by fixing a conductive filler such as carbon black to the particle surface of the silicon-based active material using a binding agent.

As the binding agent contained in the negative electrode mixture layer, a fluorine-containing resin such as PTFE or PVDF, PAN, polyimide, an acrylic resin, polyolefin, or the like may be used as in the positive electrode, but styrene-butadiene rubber (SBR) is preferably used. In addition, the negative electrode mixture layer may contain, for example, CMC or a salt thereof, polyacrylic acid (PAA) or a salt thereof, polyvinyl alcohol (PVA), or the like.

### [Separator]

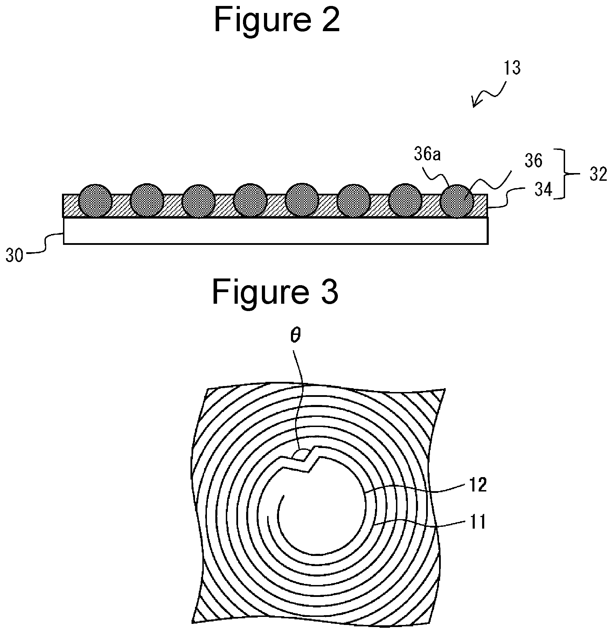

FIG. 2 is a schematic cross-sectional view showing an example of a separator according to the present embodiment. As shown in FIG. 2, the separator 13 includes a base material 30 and a functional layer 32 formed on the base material 30. The functional layer 32 may be provided on one surface of the base material 30, or may be provided on both surfaces of the base material 30.

The base material 30 is, for example, a porous sheet having ion permeability and insulating properties, and specific examples thereof include a microporous thin film, a woven fabric, and a nonwoven fabric. The material of the base material 30 is not particularly limited, and examples thereof include polyethylene, polypropylene, polyolefin such as a copolymer of polyethylene and an α-olefin, acrylic resin, polystyrene, polyester, cellulose, polyimide, polyphenylene sulfide, polyether ether ketone, and fluororesin.

The functional layer 32 includes a heat-resistant layer 34 containing a heat-resistant resin and inorganic particles, and resin particles 36 dispersed in the heat-resistant layer 34 and having an average particle diameter (D50) larger than the thickness of heat-resistant layer 34. The resin particles 36 having an average particle diameter (D50) larger than the thickness of heat-resistant layer 34 form projections 36a projecting from a surface of heat-resistant layer 34.

With the above-described configuration, the projections 36a formed by the resin particles 36 adhere to the electrode (the positive electrode 11 or the negative electrode 12) facing the separator 13, improving adhesion between the separator 13 and the electrode, which is thought to make it possible to suppress electrode plate deformation during the charge-discharge cycle. In a case where the functional layer 32 is provided on one surface of the base material 30, the separator 13 may be provided between the positive electrode 11 and the negative electrode 12 such that the functional layer 32 faces the positive electrode 11, or the separator 13 may be provided between the positive electrode 11 and the negative electrode 12 such that the functional layer 32 faces the negative electrode 12. However, it is considered important to suppress deformation of the positive electrode 11 in order to effectively suppress an internal short circuit caused by electrode plate deformation. Therefore, it is preferable to provide the separator 13 between the positive electrode 11 and the negative electrode 12 such that the functional layer 32 faces the positive electrode 11 to bond the projections 36a to the positive electrode 11.

Examples of the inorganic particles contained in the heat-resistant layer 34 include metal oxide particles, metal nitride particles, metal fluoride particles, and metal carbide particles.

Examples of the metal oxide particles include aluminum oxide, titanium oxide, magnesium oxide, zirconium oxide, nickel oxide, silicon oxide, and manganese oxide. Examples of the metal nitride particles include titanium nitride, boron nitride, aluminum nitride, magnesium nitride, and silicon nitride. Examples of the metal fluoride particles include aluminum fluoride, lithium fluoride, sodium fluoride, magnesium fluoride, calcium fluoride, and barium fluoride. Examples of the metal carbide particles include silicon carbide, boron carbide, titanium carbide, and tungsten carbide.

The inorganic particles may be porous aluminosilicates such as zeolite (M_{2/n}O·Al₂O₃·xSiO₂·yH₂O, M is a metal element, n is a valence of M, x ≥ 2, and y ≥ 0), layered silicates such as talc (Mg₃Si₄O₁₀(OH)₂), minerals such as barium titanate (BaTiO₃) or strontium titanate (SrTiO₃), or the like. Note that one kind of them may be used alone, or two or more kinds of them may be used in combination.

The average particle diameter (D50) of the inorganic particles is preferably, for example, in the range of 0.1 µm to 1.0 µm. In the present specification, D50 means a particle diameter at which a cumulative frequency in a volume-based particle size distribution is 50% from the smallest particle size, and is also referred to as a median diameter. The particle size distribution of the inorganic particles can be measured using a laser diffraction type particle size distribution measuring apparatus (for example, MT3000II manufactured by MicrotracBEL Corp.) using water as a dispersion medium.

The amount of the inorganic particles contained in heat-resistant layer 34 is, for example, preferably in a range of 15% by mass to 85% by mass, and more preferably in a range of 30% by mass to 60% by mass with respect to the total mass of heat-resistant layer 34.

The heat-resistant resin contained in the heat-resistant layer 34 is preferably, for example, a resin that is not melted or decomposed in a temperature range of lower than 200°C. Specific examples thereof include a nitrogen-containing aromatic polymer from the viewpoint of high heat resistance. The nitrogen-containing aromatic polymer is a polymer containing a nitrogen atom and an aromatic ring in the main chain, and examples thereof include aromatic polyamide (which may hereinafter be referred to as "aramid"), aromatic polyimide (which may hereinafter be referred to as "polyimide"), and aromatic polyamideimide (which may hereinafter be referred to as "polyamideimide"). Examples of the aramid include meta-oriented aromatic polyamide (which may hereinafter be referred to as "meta-aramid") and para-oriented aromatic polyamide (which may hereinafter be referred to as "para-aramid"). One kind of them may be used alone, or two or more kinds of them may be used in combination.

From the viewpoint of improving the heat resistance of the separator 13, the content of the heat-resistant resin is, for example, preferably 15% by mass to 85% by mass, and more preferably 40% by mass to 70% by mass with respect to the total mass of the heat-resistant layer 34.

The thickness of the heat-resistant layer 34 is preferably smaller than the thickness of the base material 30, and is, for example, 0.5 µm to 5 µm.

The heat-resistant layer 34 preferably further contains a binding agent. The binding agent has a function of bonding the inorganic particles to each other and bonding the inorganic particles to the base material 30. Examples of the binding agent include fluorine-based resins such as polyvinylidene fluoride (PVDF) and polytetrafluoroethylene (PTFE), polyimide-based resins, acryl-based resins, polyolefin-based resins, styrene-butadiene rubber (SBR), nitrile-butadiene rubber (NBR), carboxymethyl cellulose (CMC) or a salt thereof, and polyvinyl alcohol (PVA). One kind of them may be used alone, or two or more kinds of them may be used in combination. The amount of the binding agent contained in the heat-resistant layer 34 is preferably 0.5 to 10% by mass, and more preferably 1 to 5% by mass with respect to the total mass of the heat-resistant layer 34.

The resin particles 36 dispersed in the heat-resistant layer 34 are required to have an average particle diameter (D50) larger than the thickness of the heat-resistant layer 34. The average particle diameter (D50) of the resin particles 36 is preferably 1 µm to 10 µm larger than the thickness of the heat-resistant layer 34. When the average particle diameter (D50) of the resin particles 36 is 1 µm or more larger than the thickness of the heat-resistant layer 34, for example, projections 36a projecting from the surface of the heat-resistant layer 34 can be easily formed, ensuring good adhesion to the electrode. When the average particle diameter (D50) of the resin particles 36 is 10 µm or less smaller than the thickness of the heat-resistant layer 34, the resin particles 36 are suppressed from falling off from the heat-resistant layer 34.

From the viewpoint of ensuring good adhesion to the electrode, the amount of the resin particles 36 dispersed in the heat-resistant layer 34 is, for example, preferably in a range of 1% by mass to 15% by mass, and more preferably in a range of 3% by mass to 7% by mass, with respect to the mass of the heat-resistant resin contained in the heat-resistant layer 34.

From the viewpoint of ensuring good adhesion to the electrode, the number of projections 36a formed by the resin particles 36 is, for example, preferably 10 to 35, and more preferably 15 to 30 in an area of 100 µm × 100 µm in a plan view of the surface of the functional layer 32.

As the resin particles 36, for example, a known polymer that can be used as a binding agent when forming the functional layer 32 can be used. Examples of monomer units constituting the resin particles 36 (polymer) include aromatic vinyl monomer units, (meth)acrylic acid ester monomer units, and fluorine-containing monomer units. In the present disclosure, "(meth)acrylic" means acrylic and/or methacrylic. The resin particles 36 (polymer) "containing monomer units" means that the polymer obtained using a monomer contains repeating units derived from the monomer.

Examples of aromatic vinyl monomers capable of forming aromatic vinyl monomer units include, but are not particularly limited to, styrene, α-methylstyrene, styrenesulfonic acid, butoxystyrene, vinylnaphthalene, and the like. Examples of (meth)acrylic acid ester monomers capable of forming (meth)acrylic acid ester monomer units include acrylic acid alkyl esters such as methyl acrylate, ethyl acrylate, n-propyl acrylate, isopropyl acrylate, butyl acrylates such as n-butyl acrylate and t-butyl acrylate, octyl acrylates such as pentyl acrylate, hexyl acrylate, heptyl acrylate, and 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate such as n-butyl methacrylate and t-butyl methacrylate, octyl methacrylates such as pentyl methacrylate, hexyl methacrylate, heptyl methacrylate, and 2-ethylhexyl methacrylate, nonyl methacrylate, decyl methacrylate, lauryl methacrylate, n-tetradecyl methacrylate, and stearyl methacrylate.

Examples of fluorine-containing monomers capable of forming fluorine-containing monomer units include, but are not particularly limited to, vinylidene fluoride, tetrafluoroethylene, hexafluoropropylene, vinyl trifluoride chloride, vinyl fluoride, and perfluoroalkyl vinyl ether.

The resin particles 36 may contain crosslinkable monomer units in addition to the above-described monomer units. Here, the crosslinkable monomer unit is a monomer capable of forming a crosslinked structure during or after polymerization by heating or irradiation with energy rays. Examples of the monomers capable of forming crosslinkable monomer units include a polyfunctional monomer having two or more polymerizable reactive groups in the monomer. Examples of the polyfunctional monomers include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; ethylenically unsaturated monomers containing epoxy groups such as allyl glycidyl ether and glycidyl methacrylate; and the like.

The resin particles 36 can be prepared by polymerizing a monomer composition containing the above-described monomer, for example, in an aqueous solvent such as water. The polymerization method is not particularly limited, and may be, for example, a suspension polymerization method, an emulsion polymerization aggregation method, a pulverization method, or the like. As the polymerization reaction, any reaction such as radical polymerization or living radical polymerization can be used.

In the monomer composition used for preparing the resin particles 36, other blending agents such as a chain transfer agent, a polymerization regulator, a polymerization reaction retarder, a reactive fluidizing agent, a filler, a flame retardant, an antiaging agent, and a colorant can be blended in a certain blending amount.

An example of a method for producing the separator 13 according to the present embodiment will be described. For example, a slurry composition for a functional layer is prepared by mixing inorganic particles, a heat-resistant resin, resin particles 36, water serving as a dispersion medium, and other components (e.g., a binding agent) used as necessary. Then, the separator 13 according to the present embodiment can be produced by applying the slurry for the functional layer onto the base material and then drying the slurry.

### EXAMPLES

Hereinafter, the present disclosure will be further described with reference to examples. However, the present disclosure is not limited to these examples.

### <Example 1>

### [Production of Positive Electrode]

A positive electrode mixture slurry was prepared by mixing 100 parts by mass of LiNi_{0.88}Co_{0.09}Al_{0.03}O₂, 1 part by mass of acetylene black (AB), and 0.9 parts by mass of polyvinylidene fluoride (PVDF), and adding an appropriate amount of N-methyl-2-pyrrolidone (NMP) thereto. Next, the positive electrode mixture slurry was applied onto both surfaces of an aluminum foil having a thickness of 15 µm, and a coating film was dried. Then, a positive electrode in which a positive electrode mixture layer was formed on both surfaces of a positive electrode current collector was prepared by rolling the coating film using a roller, and then cutting the coating film into a predetermined electrode size (a thickness of 0.144 mm, a width of 62.6 mm, and a length of 861 mm). An exposed portion where the positive electrode mixture layer was not formed and the positive electrode current collector was exposed was provided at a center portion of the positive electrode in the longitudinal direction, and a positive electrode lead made of aluminum was welded to the exposed portion.

### [Production of Negative Electrode]

A negative electrode mixture slurry was prepared by mixing 95 parts by mass of graphite powder, 5 parts by mass of Si oxide, 1 part by mass of sodium carboxymethylcellulose (CMC-Na), and 1 part by mass of a dispersion of styrene-butadiene rubber (SBR), and adding an appropriate amount of water thereto. Next, the negative electrode mixture slurry was applied onto both surfaces of a copper foil having a thickness of 8 µm, and a coating film was dried. Then, a negative electrode in which a negative electrode mixture layer was formed on both surfaces of a negative electrode current collector was produced by rolling the coating film using a roller, and then cutting the coating film into a predetermined electrode size. An exposed portion where the negative electrode mixture layer was not formed and the negative electrode current collector was exposed was provided at one end portion of the negative electrode in the longitudinal direction (an end portion located on the wound inner side of the electrode assembly), and a negative electrode lead made of nickel was welded to the exposed portion.

### [Production of Separator]

A porous base material made of polyethylene having a thickness of 12 µm was prepared. A slurry for a functional layer was prepared by mixing para-aramid (heat-resistant resin), α-Al₂O₃ powder (inorganic particles) having an average particle diameter (D50) of 0.8 µm, acrylic resin particles composed of a copolymer of 2-ethylhexyl acrylate and styrene having an average particle diameter (D50) of 4 µm (hereinafter, acrylic resin particles), and an acryl-based binder (binding agent) at a solid content mass ratio of 100: 150:6:5, and then adding an appropriate amount of water such that the solid content concentration was 10% by mass. A separator in which a functional layer including a heat-resistant layer having an average thickness of 3 µm was formed on one surface of the base material was obtained by applying the slurry for the functional layer onto the entire area of one surface of the base material using a microgravure coater, and heating and drying the coating film in an oven at 50°C for 4 hours.

When the surface of the functional layer of the obtained separator was observed with a scanning electron microscope, 10 projections of some of the resin particles projecting from the heat-resistant layer were observed in an area of 100 µm × 100 µm.

### [Production of Electrode Assembly]

A winding-type electrode assembly was produced by spirally winding the positive electrode and the negative electrode with the separator interposed therebetween. At this time, the separator was disposed such that the functional layer of the separator faced the positive electrode. The number of windings of the electrode assembly was set to 18, with the positive electrode as the reference.

### [Preparation of Non-Aqueous Electrolyte]

A non-aqueous electrolyte was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF₆) therein at a concentration of 1.5 mol/liter.

### [Production of Non-Aqueous Electrolyte Secondary Battery]

Insulating plates were disposed on and under the electrode assembly, respectively, and the electrode assembly was accommodated in an exterior can. A negative electrode lead was welded to the bottom of the bottomed cylindrical exterior can, and a positive electrode lead was welded to the sealing assembly. A non-aqueous electrolyte secondary battery was produced by sealing the opening of the exterior can with the sealing assembly through the gasket after injecting a non-aqueous electrolyte into the exterior can, and then leaving the exterior can in a thermostatic chamber at 60°C for 15 hours.

### [Evaluation of Deformation of Electrode Plate]

The non-aqueous electrolyte secondary battery was charged at a constant current of 0.3 It until the battery voltage reached 4.2 V, and then charged at a constant voltage of 4.2 V until the current reached 0.02 It. Thereafter, the non-aqueous electrolyte secondary battery was discharged at a constant current of 1.0 It until the battery voltage reached 2.7 V. This charge-discharge cycle was repeated 500 times, with a pause time of 20 minutes between every two cycles. After the 500 cycles, the non-aqueous electrolyte secondary battery was charged at a constant current of 0.3 It until the battery voltage reached 4.2 V, and then charged at a constant voltage of 4.2 V until the current reached 0.02 It to enter a charged state. The cross section of the non-aqueous electrolyte secondary battery in this charged state was observed in the vicinity of the center of the winding of the electrode assembly using an X-ray CT apparatus (SMX-225CT FPD HR, manufactured by Shimadzu Corporation). As shown in FIG. 3, when deformation (bending) of the electrode plate (at least one of the positive electrode 11 and the negative electrode 12) having an angle θ equal to or lower than 150° was confirmed, it was determined to be electrode plate deformation to evaluate whether an electrode plate was deformed. The number of batteries evaluated is three.

### <Example 2>

A non-aqueous electrolyte secondary battery was produced in the same manner as in Example 1 except that para-aramid, α-Al₂O₃ powder (inorganic particles) having an average particle diameter (D50) of 0.8 µm, acrylic resin particles having an average particle diameter (D50) of 4 µm, and an acryl-based binder (binding agent) were mixed at a solid content mass ratio of 100:150:9:5 when a separator was produced, and electrode plate deformation was evaluated.

When the surface of the functional layer of the separator in Example 2 was observed with a scanning electron microscope, 18 projections of the resin particles projecting from the heat-resistant layer were observed in an area of 100 µm × 100 µm.

### <Example 3>

A non-aqueous electrolyte secondary battery was produced in the same manner as in Example 1 except that para-aramid, α-Al₂O₃ powder (inorganic particles) having an average particle diameter (D50) of 0.8 µm, acrylic resin particles having an average particle diameter (D50) of 4 µm, and an acryl-based binder (binding agent) were mixed at a solid content mass ratio of 100:150:18:5 when a separator was produced, and electrode plate deformation was evaluated.

When the surface of the functional layer of the separator in Example 3 was observed with a scanning electron microscope, 35 projections of the resin particles projecting from the heat-resistant layer were observed in an area of 100 µm × 100 µm.

### <Example 4>

A non-aqueous electrolyte secondary battery was produced in the same manner as in Example 1 except that para-aramid, α-Al₂O₃ powder (inorganic particles) having an average particle diameter (D50) of 0.8 µm, acrylic resin particles having an average particle diameter (D50) of 6 µm, and an acryl-based binder (binding agent) were mixed at a solid content mass ratio of 100:150:15:5 when a separator was produced, and electrode plate deformation was evaluated.

When the surface of the functional layer of the separator in Example 4 was observed with a scanning electron microscope, 25 projections of the resin particles projecting from the heat-resistant layer were observed in an area of 100 µm × 100 µm.

### <Example 5>

A non-aqueous electrolyte secondary battery was produced in the same manner as in Example 1 except that para-aramid, α-Al₂O₃ powder (inorganic particles) having an average particle diameter (D50) of 0.8 µm, acrylic resin particles having an average particle diameter (D50) of 10 µm, and an acryl-based binder (binding agent) were mixed at a solid content mass ratio of 100: 150:24:5 when a separator was produced, and electrode plate deformation was evaluated.

When the surface of the functional layer of the separator in Example 5 was observed with a scanning electron microscope, 10 projections of the resin particles projecting from the heat-resistant layer were observed in an area of 100 µm × 100 µm.

### <Example 6>

A non-aqueous electrolyte secondary battery was produced in the same manner as in Example 1 except that meta-aramid was used as a heat-resistant resin when a separator was produced, and electrode plate deformation was evaluated.

When the surface of the functional layer of the separator in Example 6 was observed with a scanning electron microscope, 10 projections of the resin particles projecting from the heat-resistant layer were observed in an area of 100 µm × 100 µm.

### <Example 7>

A non-aqueous electrolyte secondary battery was produced in the same manner as in Example 1 except that polyamideimide was used as a heat-resistant resin when a separator was produced, and electrode plate deformation was evaluated.

When the surface of the functional layer of the separator in Example 7 was observed with a scanning electron microscope, 11 projections of the resin particles projecting from the heat-resistant layer were observed in an area of 100 µm × 100 µm.

### <Comparative Example>

A non-aqueous electrolyte secondary battery was produced in the same manner as in Example 1 except that acrylic resin particles having an average particle diameter (D50) of 4 µm were not used when a separator was produced, and electrode plate deformation was evaluated.

The results of evaluations as to whether electrode plates were deformed in Examples 1 to 7 and Comparative Example are summarized in Table 1. An example where no electrode plates were deformed in all of the three batteries evaluated was evaluated as ∘, and an example where it was confirmed that an electrode plate was deformed even in one of the three batteries evaluated was evaluated as ×.

**[Table 1]**

| | Heat-resistant resin | Acrylic resin particles | | | Electrode plate deformation |
|---|---|---|---|---|---|
| | | D50 (µm) | Parts by mass with respect to 100 parts by mass of heat-resistant resin | Number of projections | |
| Example 1 | Para-aramid | 4 | 6 | 10 | ○ |
| Example 2 | Para-aramid | 4 | 9 | 18 | ○ |
| Example 3 | Para-aramid | 4 | 18 | 35 | ○ |
| Example 4 | Para-aramid | 6 | 15 | 25 | ○ |
| Example 5 | Para-aramid | 10 | 24 | 10 | ○ |
| Example 6 | Meta-aramid | 4 | 6 | 10 | ○ |
| Example 7 | Amideimide | 4 | 6 | 11 | ○ |
| Comparative example | Para-aramid | - | - | - | × |

As can be seen from the evaluation results in Table 1, electrode plates were not deformed in Examples 1 to 7, but electrode plates were deformed in the comparative example. By using a separator including a base material layer and a functional layer formed on the base material layer, the functional layer including a heat-resistant layer containing a heat-resistant resin and inorganic particles, and resin particles dispersed in the heat-resistant layer and having an average particle diameter larger than a thickness of the heat-resistant layer, and the resin particles forming projections projecting from a surface of the heat-resistant layer as in each of the examples, it is possible to suppress electrode plate deformation caused by a charge-discharge cycle.

### [Supplementary Notes]

(1) A non-aqueous electrolyte secondary battery including: an electrode assembly in which a positive electrode and a negative electrode are wound with a separator interposed therebetween; and an exterior housing assembly accommodating the electrode assembly,
   in which the separator includes a base material layer and a functional layer formed on the base material layer,
   the functional layer includes a heat-resistant layer containing a heat-resistant resin and inorganic particles, and resin particles dispersed in the heat-resistant layer and having an average particle diameter larger than a thickness of the heat-resistant layer, and
   the resin particles form projections projecting from a surface of the heat-resistant layer.
(2) The non-aqueous electrolyte secondary battery according to (1), in which the average particle diameter of the resin particles is 1 µm to 10 µm larger than the thickness of the heat-resistant layer.
(3) The non-aqueous electrolyte secondary battery according to (1) or (2), in which the resin particles have adhesion, and the projections adhere to the positive electrode.
(4) The non-aqueous electrolyte secondary battery according to any one of (1) to (3), in which the heat-resistant resin includes at least one resin of para-aramid, meta-aramid, polyamideimide, and polyimide.
(5) The non-aqueous electrolyte secondary battery according to any one of (1) to (4), in which 10 to 35 projections are present in an area of 100 µm × 100 µm in a plan view of a surface of the functional layer.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Exterior housing assembly
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Base material
- 32: Functional layer
- 34: Heat-resistant layer
- 36: Resin particles
- 36a: Projections

## Claims

1. A non-aqueous electrolyte secondary battery comprising: an electrode assembly in which a positive electrode and a negative electrode are wound with a separator interposed therebetween; and an exterior housing assembly accommodating the electrode assembly,
wherein the separator includes a base material layer and a functional layer formed on the base material layer,
the functional layer includes a heat-resistant layer containing a heat-resistant resin and inorganic particles, and resin particles dispersed in the heat-resistant layer and having an average particle diameter larger than a thickness of the heat-resistant layer, and
the resin particles form projections projecting from a surface of the heat-resistant layer.

2. The non-aqueous electrolyte secondary battery according to claim 1, wherein the average particle diameter of the resin particles is 1 µm to 10 µm larger than the thickness of the heat-resistant layer.

3. The non-aqueous electrolyte secondary battery according to claim 1 or 2, wherein the projections adhere to the positive electrode.

4. The non-aqueous electrolyte secondary battery according to claim 1 or 2, wherein the heat-resistant resin includes at least one of para-aramid, meta-aramid, polyamideimide, and polyimide.

5. The non-aqueous electrolyte secondary battery according to claim 1 or 2, wherein 10 to 35 projections are present in an area of 100 µm × 100 µm in a plan view of a surface of the functional layer.
